# EUROPEAN PATENT SPECIFICATION

(11) **EP 4 435 647 B1**
(45) Date of publication and mention of the grant of the patent: **24.06.2026**
(21) Application number: 23162919.7
(22) Date of filing: 20.03.2023
(51) Int. Cl.: G06F 21/53, H04L 9/08

(54) **METHOD FOR PROVIDING THE FUNCTIONALITY OF MULTIPLE MICROSERVICES AND/OR THE FUNCTIONALITY OF MULTIPLE SOFTWARE CONTAINERS BY MEANS OF A CLOUD INFRASTRUCTURE, SYSTEM OR CLOUD INFRASTRUCTURE, SECRET MANAGEMENT INSTANCE, PROGRAM AND COMPUTER-READABLE MEDIUM**
VERFAHREN ZUM BEREITSTELLEN DER FUNKTIONALITÄT MEHRERER MIKRODIENSTE UND/ODER MEHRERER SOFTWARE-CONTAINER
PROCÉDÉ POUR FOURNIR LA FONCTIONNALITÉ DE MULTIPLES MICROSERVICES ET/OU LA FONCTIONNALITÉ DE MULTIPLES CONTENEURS DE LOGICIEL

(43) Date of publication of application: 25.09.2024
(73) Proprietor: Deutsche Telekom AG, 53113 Bonn (DE)
(72) Inventor: SUDHOLT, Frank, 53604 Bad Honnef (DE); STUMPF, Alexander, 64625 Bensheim (DE)
(74) Representative: Schwöbel, Thilo K.

(56) References cited:
- EP-A1- 4 054 115
- WO-A1-2021/145608
- US-A1- 2021 273 929

## Description

### BACKGROUND

The present invention relates a method for providing the functionality of multiple microservices and/or the functionality of multiple software containers by means of a cloud infrastructure, wherein with respect to the microservices and/or the software containers the cloud infrastructure comprises or is associated with a cloud domain and a continuous integration / continuous delivery domain.

Furthermore, the present invention relates to a system or to a cloud infrastructure for providing the functionality of multiple microservices and/or the functionality of multiple software containers, wherein with respect to the microservices and/or the software containers the cloud infrastructure comprises or is associated with a cloud domain and a continuous integration / continuous delivery domain.

Additionally, the present invention relates to a secret management instance for being operated as part of an inventive system or as part of, or associated with, an inventive cloud infrastructure.

Furthermore, the present invention relates to a program and/or to a computer-readable medium for providing the functionality of multiple microservices and/or the functionality of multiple software containers by means of a cloud infrastructure according to the inventive method.

Traditional virtualization technologies have drawbacks especially in terms of performance. Software container technology allows several software containers to run on the same host or virtual machine, each of which is a virtual environment or application or cluster. Kubernetes, as a software container operation platform, is able to realize the functions of combining several containers into different services and dynamically allocating the host running the container.
In a Kubernetes cluster, in case that a new pod instance or a new software container or a new (or updated) kind of software container or a new microservice is to be deployed - e.g. in case of deploying the functionality of an updated version of such microservice and/or software container, a large number of configurations are typically required. Furthermore in Kubernetes or other hosted environments, secrets such as tokens or private keys (of certificates) may need to be redeployed with each deployment, e.g. update of, e.g., microservices and/or software containers. This must be done securely in the deployment chain and/or operatively in the hosted environment. In this context, such secrets cannot be generated and managed by the container in the secured runtime environment in isolation from the outside world, since they are used to access resources outside of the platform.

Hence, secrets in Kubernetes environments need to be managed outside of the runtime environment and inserted into the deployment process for most deployment customizations. Each of the systems involved have a lot of systems and people (necessarily) accessing them that may/should not have access to those secrets. There is a need for solutions that provide a higher degree, or level, of security in handling such secrets.

US 2021/273929 A1 is relevant prior art.

### SUMMARY

An object of the present invention is to provide an effective and cost effective solution for providing the functionality of multiple microservices and/or the functionality of multiple software containers by means of a cloud infrastructure having a higher degree, or level, of security. A further object of the present invention is to suggest a system or a cloud infrastructure, a corresponding secret management instance, and a corresponding program and computer-readable medium.

The object of the present invention is achieved by a method for providing the functionality of multiple microservices and/or the functionality of multiple software containers by means of a cloud infrastructure, wherein with respect to the microservices and/or the software containers the cloud infrastructure comprises or is associated with a cloud domain and a continuous integration / continuous delivery domain,
wherein the cloud domain comprises a cloud pod instance,
wherein the cloud infrastructure furthermore comprises or is associated with a secret management instance and a container image repository,
wherein, in order to deploy and operatively use a specific microservice and/or a specific software container as part of the pod instance, the pod instance needs to be provided with a secret information,
wherein the method comprises the steps of:
   -- in a first step, the secret management instance generates a first secret part of the secret information and at least a second secret part of the secret information, wherein the secret information is able to be generated, based on a knowledge of the first and the at least second secret parts, by means of applying a secret generation algorithm,
   -- in a second step, the first secret part is provided, by the secret management instance, to a first entity or functionality, and the second secret part is provided, by the secret management instance, to a second entity or functionality, wherein the first and second entities or functionalities are chosen among
      -- a continuous integration / continuous delivery chain,
      -- a cloud secret store instance,
      -- a trusted party secret store instance, and
      -- a further continuous integration / continuous delivery chain,
   -- in a third step, in view of the specific microservice and/or the specific software container being deployed and operatively used as a part of the pod instance, a respective container deployment information is provided to the pod instance, and an initialization of the container deployment information involves to use the first secret part and the second secret part to generate the secret information, based on the first and the at least second secret parts, by means of applying the secret generation algorithm.

It is thereby advantageously possible, according to the present invention, to avoid (unsecured) access to such secrets, or such secret information, in the deployment process. According to the present invention, secrets are split (or secret information is split) after their/its generation. According to the present invention, this is done in such a way that such secrets (or such secret information) cannot be determined by knowing one part (of a plurality of secret information parts) only, i.e. at least two such secret information parts (i.e. more than one of such parts or secret information parts) of the secret information is required in order to be able to have access to (or to generate or to derive) the secret information itself. The parts or secret (information) parts are then used (to generate the secret information itself) as late as possible in the deployment process (of the microservices and/or software containers) so that the respective secret or secret information or plurality of secrets is/are available to the respective microservice and/or software container. Such deriving or using of the secret parts is preferably done using a cryptographically strong function, e.g. XOR function, based on symmetric cryptography like advanced encryption standard, AES, based on asymmetric cryptography, or based on hash functions.

According to the present invention, the secret parts of the secret information may be partitioned in a hosted environment, in particular among the following systems, entities, or components, i.e. at least one of such systems, entities, or components comprise at least one of the secret parts of the secret information:
-- a continuous integration / continuous delivery pipeline or continuous integration / continuous delivery chain, especially as one or a plurality of protected variables,
-- a cloud secret storage instance, especially of the hosting platform or cloud infrastructure,
-- a separately hosted secret store or vault, e.g., a Hashicorp Vault,
-- a control- and/or worker-Node of the hosting platform.
According to the present invention, it is also possible that secret part is able to be used in the code/image (i.e. in, or as part of, a container image and thus in the repository (contributed by the development of the respective software container image). In practice, however, this variant might be associated with further restrictions.

Hence, according to the present invention, a method for providing the functionality of multiple microservices and/or the functionality of multiple software containers is suggested, and the present invention especially refers to being able to provide for the deployment of new or updated versions of such microservices and/or such functionality of software contains in a comparatively simple manner. According to generally known solutions, this is able to be realized by means of a cloud infrastructure, or cloud provider infrastructure by means of which the multiple microservices (or their functionality) and/or the functionality of multiple software containers are/is accessible. With respect to such microservices and/or such software containers, the cloud infrastructure comprises or is associated - also in a conventionally known manner - with a cloud domain and a continuous integration / continuous delivery domain. Such a cloud domain typically comprises a cloud pod instance. Furthermore, the cloud infrastructure also comprises, or is associated with, a secret management instance and a container image repository.

In order to deploy and operatively use a specific microservice and/or a specific software container (especially an updated or new or modified specific microservice and/or an updated or new or modified specific software container) as part of the pod instance, the pod instance needs to be provided with the secret information, i.e. the secret information needs to be present at, or usable by, or able to be generated by, the specific microservice and/or the specific software container (especially the updated or new or modified specific microservice and/or updated or new or modified specific software container) in view of its operative use. In order to be able to assure this and to likewise be able to provide for an enhanced level of security or data protection (or confidentiality in the sense that, if possible, entities or instances are only provided with secret information that these entities or instances are actually required to know, or to apply), the inventive method comprises the steps of:
-- in the first step, the secret management instance generates the first secret part of the secret information and at least the second secret part of (or from) the secret information, wherein the secret information is able to be generated, based on a knowledge of the first and the at least second secret parts, by means of applying the secret generation algorithm,
-- in the second step, the first secret part is provided, by the secret management instance, to the first entity or functionality, and the second secret part is provided, by the secret management instance, to the second entity or functionality, wherein the first and second entities or functionalities are chosen among
   -- a continuous integration / continuous delivery chain,
   -- a cloud secret store instance,
   -- a trusted party secret store instance, and
   -- a further continuous integration / continuous delivery chain,
-- in the third step, in view of the specific microservice and/or the specific software container being deployed and operatively used as a part of the pod instance, a respective container deployment information is provided to the pod instance, and an initialization of the container deployment information involves to use the first secret part and the second secret part to generate the secret information, based on the first and the at least second secret parts, by means of applying the secret generation algorithm.

Hence, according to the present invention, it is advantageously possible that the secret information does not need to be provided, as it is, to the respective software container instance (or as part of the respective software container image), but the secret information is able to be provided, to the respective software container instance in a distributed manner, by means of using a first secret part and at least a second secret part.
Once these different secret parts are available (at the respective software container instance (of, or within, the pod instance) or at, e.g., the continuous integration / continuous delivery chain, the secret information is able to be generated (or derived) from the different secret parts, and operatively used by (or within) the specific software container (instance).

Especially, it is advantageously possible according to the present invention that the secret information (to be obtained by means of (or to be derived) using a plurality of secret parts) is able to be used to provide access to a vault that holds the actual secret (to be operatively used by the respective specific software container).
This advantageously makes it easier to change credentials, since such credentials can be changed without having to redistribute the distributed secret information and, especially, the different secret parts.

According to the present invention, it is furthermore advantageously possible to secure access, for the respective specific software container, to multiple secrets, or to multiple pieces of secret information (e.g., multiple tokens or private keys for different certificates).

According to the present invention, different options exist when it comes to generating (or deriving) the secret information based on the different secret parts: Generally according to the present invention, a function, f(), is used, or applied, in order to obtain (or generate) the secret information from the different secret parts. According to the present invention, these different options are able to be realized in relation to different embodiments:
For example, in order to generate the secret parts (from the secret information) an algorithm according to, or being based on, Shamir's secret sharing (SSS) algorithm is able to be used; this advantageously makes it possible that for the computation of the secret information (from the secret parts) not all, but only a defined number of secret parts (i.e. a subset of secret parts out of a plurality of secret parts) are needed. Furthermore (alternatively or cumulatively to using Shamir's secret sharing (SSS) algorithm), it is advantageously possible according to the present invention that the function (f()) - that is used to derive the secret information based on the different secret parts - and, if necessary, the division of the secret parts, is chosen in such a way that the secret parts of a subset (of the plurality of secret parts) - i.e. individual secret parts of the secret information can be changed, but the secret information itself and other secret parts remain constant (or unchanged) - i.e. there is solely the one secret information being derivable from a plurality of secret parts wherein different sets of such secret parts might lead to the same secret information. E.g., such an embodiment can be realized by XORing (applying an exclusive-or-operation) and/or by splitting. In this way, the secret parts for participating systems are able to be changed afterwards (i.e. after an initial generation of the secret parts), provided that at least the secret parts of two systems are changed.
Furthermore alternatively - instead of changing (afterwards) solely individual secret parts but not the resulting secret information itself - (but still alternatively or cumulatively to using Shamir's secret sharing (SSS) algorithm), some secret parts as well as the secret information itself is susceptible to be changed (e.g. with regard to different deployments at different points in time or with regard to different update operations), and some other individual secret parts (e.g. those stored at the hoster, i.e. on the cloud infrastructure) may remain constant. Again, e.g. XOR can be used. According to such an alternative embodiment, there is - besides one secret information (or a first secret information) being derivable from a first set of secret parts (the first set of secret parts comprising a first plurality of secret parts) - at least a further secret information (or a second secret information) that is derivable from a second set of secret parts (the second set of secret parts comprising a second plurality of secret parts), wherein, the first and second set of secret parts at least partly overlap (i.e. one or a plurality of secret parts of the first set of secret parts is identical to the corresponding secret part (or secret parts) of the second set of secret parts), and - furthermore - the first and second set of secret parts are partly different or disjunct (i.e. one or a plurality of such secret parts (of the first set of secret parts) differ from the corresponding secret part (or secret parts) of the second set of secret parts). It is thereby advantageously possible, according to the present invention, to provide for support for (or regarding) multiple deployment environments (i.e. a plurality of cloud infrastructures): The shared parts of the deployment chain always use "their" part of the secret (i.e. these correspond to the one or a plurality of secret parts of the first set of secret parts that is identical to the corresponding secret part (or secret parts) of the second set of secret parts), and the environment-specific systems each have their own secret part (i.e. these correspond to the one or a plurality of secret parts (of the first set of secret parts) that differ from the corresponding secret part (or secret parts) of the second set of secret parts) and so the composite secrets (i.e. the (first) secret information and the further (or: second) secret information) for the deployment environments differ; hence, such different composite secrets can be used simultaneously (in different deployment environments).

According to the present invention, it is advantageously possible and preferred that - in the first step and besides the first secret part and the second secret part of the secret information - the secret management instance generates at least a third secret part of the secret information, wherein the secret information is able to be generated, based on a knowledge of the first, the second and the at least third secret parts, by means of applying a secret generation algorithm, wherein - in the second step and besides the first and second secret parts being provided to the first and second entities or functionalities - the third secret part is provided, by the secret management instance, to a third entity or functionality, wherein the first, second and third entities or functionalities are chosen among
-- the continuous integration / continuous delivery chain,
-- the cloud secret store instance,
-- the trusted party secret store instance, and
-- the further continuous integration / continuous delivery chain,
and wherein - in the third step - the initialization of the container deployment information involves to use the first, second and at least third secret parts to generate the secret information, based on the first, second and at least third secret parts, by means of applying the secret generation algorithm.

It is thereby advantageously possible that the secret information is split (or distributed) in more than two secret parts, especially three, four, five, or more secret parts.

Especially, it is preferred according to the present invention that - in case that the secret information is split (or distributed) in three, four, five, or more, generally an integer number n, secret parts - that only a first part (i.e. a subset of secret parts), say an integer number k, of the secret parts are needed for the computation of the secret information (from the secret parts; e.g. based on Shamir's secret sharing (SSS) algorithm), and that the second part (i.e. I = n - k, or, n = k + l) of secret parts is not needed for the computation of the secret information. According to another embodiment of the present invention it is preferred and advantageously possible that the function (f()) - that is used to derive the secret information based on the different secret parts - is chosen such that the first part of k secret parts (i.e. a subset of the plurality of secret parts) can be changed, but the secret information itself and the second part of l secret parts remain constant (or unchanged) - i.e. despite the first part of k secret parts being changed, the same secret information is derivable from the total n secret parts, i.e. different sets (especially more than two) of the first part of k secret parts lead to the same secret information. E.g., such an embodiment can be realized by XORing (applying an exclusive-or-operation) and/or by splitting, and the secret parts for participating systems are able to be changed between a first point in time and a second point in time, especially after an initial generation of the secret parts, provided that at least the secrets parts of two systems are changed. Furthermore alternatively - instead of changing (afterwards) solely individual secret parts (i.e. the first part of k secret parts, or, a subset of the plurality of secret parts) but not the resulting secret information itself -, some secret parts (i.e. again the first part of k secret parts, or, a subset of the plurality of secret parts) as well as the secret information itself is susceptible to be changed (e.g. with regard to different deployments at different points in time or with regard to different update operations), and some other individual secret parts (i.e. the second part of l secret parts, e.g. those stored at the hoster, i.e. on the cloud infrastructure) may remain constant. Again, e.g. XOR can be used. According to such an alternative embodiment, there is - besides one secret information (or a first secret information) being derivable from a first set of secret parts (the first set of secret parts comprising a first plurality of secret parts, i.e. the first part of k secret parts as well as the second part of l secret parts, but the first part of k secret parts according to a first version) - at least a further secret information (or a second secret information) that is derivable from a second set of secret parts (the second set of secret parts comprising a second plurality of secret parts, i.e. likewise a first part of k secret parts as well as the second part of l secret parts, but the first part of k secret parts according to a second version, and the second part of l secret parts being, individually, identical to the second part of l secret parts of the first set of secret parts), i.e. the first and second set of secret parts at least partly overlap (i.e. regarding the respective second part of l secret parts which are identical in both the first and second set of secret parts), and - furthermore - the first and second set of secret parts are partly different or disjunct (i.e. regarding the respective first part of k secret parts). As mentioned above, it is thereby advantageously possible, according to the present invention, to provide for support for (or regarding) multiple deployment environments (i.e. a plurality of cloud infrastructures): The shared parts of the deployment chain might always use "their" part of the secret (i.e. these correspond to the respective second part of l secret parts of both the first and second set of secret parts), and the environment-specific systems each have their own secret part or plurality of secret parts (i.e. these correspond to the respective first part of k secret parts of the first and second set of secret parts that are distinct from each other, i.e. preferably, each one of the k₁ secret parts of the first set of secret parts is different from each one of the k₂ secret parts of the second set of secret parts) and such the composite secrets (i.e. the (first) secret information and the further (or: second) secret information) for the deployment environments differ.

According to the present invention, it is furthermore advantageously possible and preferred that providing the container deployment information to the pod instance and initializing the container deployment information involves to transmit an initialization container image to the pod instance, and to start the initialization container,
wherein especially, after having started the initialization container, or after having completed the initialization container, a main container in view of the specific microservice and/or the specific software container is provided to the pod instance, wherein the main container is provided with the secret information.

It is thereby advantageously possible to easily and effectively implement the inventive method. Especially, it is advantageously possible to use the initialization (software) container in a manner to prepare the use of the (operationally used) specific software container.

According to the present invention, it is furthermore advantageously possible and preferred that the initialization of the container deployment information, especially the start of the initialization container, involves at least one out of the following:
-- to transmit the first secret part and at least the second secret part to the pod instance, and to generate, at the pod instance, the secret information, based on the first and at least the second secret parts, by means of applying the secret generation algorithm,
-- to transmit the first secret part and at least the second secret part to a further continuous integration / continuous delivery chain, and to generate, at the further continuous integration / continuous delivery chain, the secret information, based on the first and at least the second secret parts, by means of applying the secret generation algorithm, and, especially, to provide the secret information from the further continuous integration / continuous delivery chain to the pod instance,
-- to transmit the first secret part and at least the second secret part to a trusted computing enclave, and to generate, at the trusted computing enclave, the secret information, based on the first and at least the second secret parts, by means of applying the secret generation algorithm, and, especially, to provide the secret information from the trusted computing enclave to the pod instance.

It is thereby advantageously possible to easily and effectively implement the inventive method.

Furthermore, it is advantageously possible and preferred according to the present invention that the secret information is able to be generated, based on a knowledge of the first and second secret parts, wherein at least one out of the following is realized:
-- the first entity or functionality corresponds to the continuous integration / continuous delivery chain and the second entity or functionality corresponds to the cloud secret store instance, or to the trusted party secret store instance, or to the further continuous integration / continuous delivery chain,
-- the first entity or functionality corresponds to the cloud secret store instance and the second entity or functionality corresponds to the GitLab secret store instance, or to the trusted party secret store instance, or to the further continuous integration / continuous delivery chain.

It is thereby advantageously possible to easily and effectively implement the inventive method.

Furthermore, it is advantageously possible and preferred according to the present invention that the secret information is able to be generated, based on a knowledge of the first, second and third secret parts, wherein at least one out of the following is realized:
-- the first entity or functionality corresponds to the continuous integration / continuous delivery chain, the second entity or functionality corresponds to the cloud secret store instance, and the third entity or functionality corresponds to the GitLab secret store instance, or to the trusted party secret store instance, or to the further continuous integration / continuous delivery chain,
-- the first entity or functionality corresponds to the cloud secret store instance, the second entity or functionality corresponds to trusted party secret store instance, and the third entity or functionality corresponds to to the further continuous integration / continuous delivery chain.

It is thereby advantageously possible to easily and effectively implement the inventive method.

Furthermore, it is advantageously possible and preferred according to the present invention that the cloud domain comprises - besides the cloud pod instance - a cloud administrator instance and a cloud secret store instance and/or wherein the continuous integration / continuous delivery domain comprises a continuous integration / continuous delivery administrator instance and a continuous integration / continuous delivery chain.

It is thereby advantageously possible to easily and effectively implement the inventive method.

Furthermore, the present invention relates to a system or to a cloud infrastructure for providing the functionality of multiple microservices and/or the functionality of multiple software containers, wherein with respect to the microservices and/or the software containers the cloud infrastructure comprises or is associated with a cloud domain and a continuous integration / continuous delivery domain,
wherein the cloud domain comprises a cloud pod instance,
wherein the cloud infrastructure furthermore comprises or is associated with a secret management instance and a container image repository,
wherein, in order to deploy and operatively use a specific microservice and/or a specific software container as part of the pod instance, the pod instance needs to be provided with a secret information,
wherein the system or cloud infrastructure is configured such that:
   -- the secret management instance generates a first secret part of the secret information and at least a second secret part of the secret information, wherein the secret information is able to be generated, based on a knowledge of the first and the at least second secret parts, by means of applying a secret generation algorithm,
   -- the first secret part is provided, by the secret management instance, to a first entity or functionality, and the second secret part is provided, by the secret management instance, to a second entity or functionality, wherein the first and second entities or functionalities are chosen among
      -- the continuous integration / continuous delivery chain,
      -- the cloud secret store instance,
      -- a GitLab secret store instance, and
      -- a trusted party secret store instance,
      -- a further continuous integration / continuous delivery chain,
   -- in view of the specific microservice and/or the specific software container being deployed and operatively used as a part of the pod instance, a respective container deployment information is provided to the pod instance, and an initialization of the container deployment information involves to use the first secret part and the second secret part to generate the secret information, based on the first and the at least second secret parts, by means of applying the secret generation algorithm.

Furthermore, the present invention relates to a secret management instance for being operated as part of an inventive system or as part of or associated with an inventive cloud infrastructure.

Additionally, the present invention relates to a program comprising a computer readable program code, which, when executed on a computer and/or on a secret management instance and/or on a cloud domain and/or on a continuous integration / continuous delivery domain and/or on a GitLab secret store instance and/or on a trusted party secret store instance and/or on a further continuous integration / continuous delivery chain, or in part on a secret management instance and/or in part on a cloud domain and/or in part on a continuous integration / continuous delivery domain and/or in part on a GitLab secret store instance and/or in part on a trusted party secret store instance and/or in part on a further continuous integration / continuous delivery chain, causes the computer and/or the secret management instance and/or the cloud domain and/or the continuous integration / continuous delivery domain and/or the GitLab secret store instance and/or the trusted party secret store instance and/or the further continuous integration / continuous delivery chain to perform an inventive method.

Furthermore, the present invention relates to a computer-readable medium comprising instructions which when executed on a computer and/or on a secret management instance and/or on a cloud domain and/or on a continuous integration / continuous delivery domain and/or on a GitLab secret store instance and/or on a trusted party secret store instance and/or on a further continuous integration / continuous delivery chain, or in part on a secret management instance and/or in part on a cloud domain and/or in part on a continuous integration / continuous delivery domain and/or in part on a GitLab secret store instance and/or in part on a trusted party secret store instance and/or in part on a further continuous integration / continuous delivery chain, causes the computer and/or the secret management instance and/or the cloud domain and/or the continuous integration / continuous delivery domain and/or the GitLab secret store instance and/or the trusted party secret store instance and/or the further continuous integration / continuous delivery chain to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings. The scope of the invention is defined by the independent claims.

### BRIEF DESCRIPTION OF THE DRAWINGS

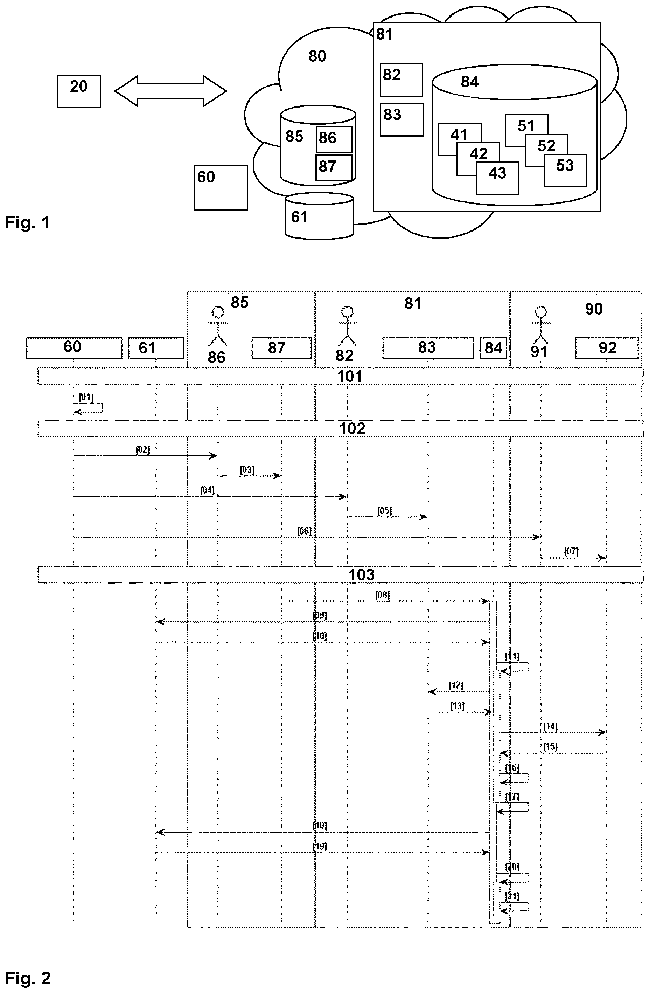

Figure 1 schematically shows a system according to the present invention, comprising a cloud infrastructure for providing the functionality of multiple microservices and/or the functionality of multiple software containers to a client device such as a user equipment or the like.
Figure 2 schematically shows a communication diagram illustrating an exemplary communication between different entities or functionalities or components especially of the cloud infrastructure for providing the functionality of the microservices and/or of the software containers based on a continuous integration / continuous delivery deployment model.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a system according to the present invention is schematically shown that is able to provide the functionality of multiple microservices 41, 42, 43 and/or the functionality of multiple software containers 51, 52, 53 to a client device 20 such as a user equipment or the like. The system comprises a cloud infrastructure 80. With respect to the microservices 41, 42, 43 and/or the software containers 51, 52, 53, the cloud infrastructure 80 comprises or is associated with a cloud domain 81 and a continuous integration / continuous delivery domain 85. The cloud domain 81 comprises a cloud pod instance 84, and the cloud infrastructure 80 furthermore comprises, or is associated with, a secret management instance 60 and a container image repository 61.

In the exemplary embodiment shown in Figure 1, the cloud domain 81 comprises - besides the cloud pod instance 84 - a cloud administrator instance 82 and a cloud secret store instance 83. Likewise in the exemplary embodiment shown in Figure 1, the continuous integration / continuous delivery domain 85 comprises a continuous integration / continuous delivery administrator instance 86 and a continuous integration / continuous delivery chain 87.

The system according to the present invention is especially used to provide the functionality of the multiple microservices 41, 42, 43 and/or the functionality of the multiple software containers 51, 52, 53 to the client device 20, e.g. a user equipment. Of course, such functionalities need to be initially deployed - as part of the cloud infrastructure 80, especially as part of the cloud domain 81, preferably as part of the cloud pod instance 84 or the like. The system comprises a cloud infrastructure 80. However, in case of the need of updates to be provided to such functionalities of the multiple microservices 41, 42, 43 and/or the multiple software containers 51, 52, 53, corresponding updates, or updated software containers need to be deployed. E.g. when using Kubernetes or other hosted environments, secrets such as tokens or private keys (of certificates) may need to be deployed (or redeployed) with each deployment, e.g. each update of, e.g., microservices and/or software containers. This needs to be done securely in the deployment chain 85 and/or operatively in the hosted environment 80. In this context, such secrets cannot be generated and managed by the respective or considered software container in the secured runtime environment in isolation from the outside world, since they are used to access resources outside of the platform.

The present invention provides a solution such that the distribution of such secrets - or the transmission or transport of the respective secret information to its destination, i.e. where this secret information is actually used and/or needed, especially operatively used and/or needed - is able to be provided in a more secure manner or with a higher degree, or level, of security especially regarding the handling, or transmission, of such secrets and regarding which instance, party or domain actually has access to such secrets.

In order to provide a solution for that, a specific microservice 41 and/or a specific software container 51 is considered, according to the present invention, and the specific microservice 41 and/or the specific software container 51 - in order to be deployed and operationally used, i.e. in order to providing its functionality as part of the cloud infrastructure 80 - is (or will be) typically part of the pod instance 84 (or the specific microservice 41 and/or the specific software container 51 is meant to be part (i.e. shall be part) of the pod instance 84 in future). Hence, the pod instance 84 needs to be provided with a corresponding secret information (in order for the specific microservice 41 and/or the specific software container 51 being correctly deployed and being able to operationally provide its functionality) which is referred to by the designation X. According to the present invention, the method comprises the steps of:
-- in a first step, the secret management instance 60 generates a first secret part X1 of the secret information X and at least a second secret part X2 of the secret information X, wherein the secret information X is able to be generated, based on a knowledge of the first and the at least second secret parts X1, X2, by means of applying a secret generation algorithm,
-- in a second step, the first secret part X1 is provided, by the secret management instance 60, to a first entity or functionality, and the second secret part X2 is provided, by the secret management instance 60, to a second entity or functionality, wherein the first and second entities or functionalities are chosen among
   -- a continuous integration / continuous delivery chain 87,
   -- a cloud secret store instance 83,
   -- a trusted party secret store instance, and
   -- a further continuous integration / continuous delivery chain,
-- in a third step, in view of the specific microservice 41 and/or the specific software container 51 being deployed and operatively used as a part of the pod instance 84, a respective container deployment information is provided to the pod instance 84, and an initialization of the container deployment information involves to use the first secret part X1 and the second secret part X2 to generate the secret information X, based on the first and the at least second secret parts X1, X2, by means of applying the secret generation algorithm.

In Figure 2, a communication diagram illustrating an exemplary communication between different entities or functionalities or components especially of the cloud infrastructure 80 is represented. According to the exemplary embodiment shown in Figure 2, performing the processing steps shown results in providing (or, in the possibility to provide) the functionality of one specific microservice (e.g. 41) of the plurality of microservices 41, 42, 43 and/or the functionality of one specific software container (e.g. 51) of the plurality of software containers 51, 52, 53. Especially, Figure 2 shows an example of a deployment of microservices 41, 42, 43 and/or of software containers 51, 52, 53 that is based on, or relies on, a continuous integration / continuous delivery deployment model.

The communication diagram of Figure 2 represents communication between the secret management instance 60, the container image repository 61, the continuous integration / continuous delivery domain 85, and the cloud domain 81. In greater detail, the continuous integration / continuous delivery domain 85 comprises the continuous integration / continuous delivery administrator instance 86 as well as the continuous integration / continuous delivery chain 87, and the cloud domain 81 comprises the cloud administrator instance 82, the cloud secret store instance 83 as well as the cloud pod instance 84. The cloud pod instance 84 especially corresponds to the runtime environment providing the possibility to run workloads, especially pods and containers. Furthermore, Figure 2 also represents a trusted party 90, wherein the trusted party 90 especially comprises a trusted party administrator instance 91 as well as a trusted party secret store instance 92.

The processing according to the embodiment exemplarily shown in Figure 2 can, roughly, be divided in a secret generation step 101 (substantially corresponding to the first step according the inventive method), a secret distribution step 102 (substantially corresponding to the second step according the inventive method), as well as a deployment step 103 (substantially corresponding to the third step according to the inventive method).
In a first processing step [01] the secret management instance 60 generates the secrets which means, of course, the secret information X but also the secret parts, in the exemplary embodiment shown in Figure 2 the three secret parts X1, X2, X3, wherein by means of applying a function f() on the secret parts X1, X2, X3 (i.e. the first secret part X1, the second secret part X2, and the third secret part X3) as arguments allows to generate (or, rather, to reconstitute) the secret information X = f(X1, X2, X3). Basically, this is the only processing step of the secret generation step 101.
In a second processing step [02], the secret management instance 60 transmits the first secret part X1 to the continuous integration / continuous delivery administrator instance 86. In a third processing step [03], the continuous integration / continuous delivery administrator instance 86 configures the first secret part X1 at the continuous integration / continuous delivery chain 87.
In a fourth processing step [04], the secret management instance 60 transmits the second secret part X2 to the cloud administrator instance 82. In a fifth processing step [05], the cloud administrator instance 82 configures the second secret part X2 at the cloud secret store instance 83.
In a sixth processing step [06], the secret management instance 60 transmits the third secret part X3 to the trusted party administrator instance 91. In a seventh processing step [07], the trusted party administrator instance 91 configures the third secret part X3 at the trusted party secret store instance 92.
Basically, the secret distribution step 102 primarily comprises the second to seventh processing steps [02] to [07], and the deployment step 103 basically comprises the following processing steps:
In an eighth processing step [08], the continuous integration / continuous delivery chain 87 triggers a deployment process at the cloud pod instance 84, wherein the deployment process is enriched by means of the first secret part X1. In a ninth processing step [09], the cloud pod instance 84 pulls the initialization container (or InitContainer) at (or from) the container image repository 61, and in a tenth processing step [10], the initialization container (or InitContainer) is transmitted, by the container image repository 61 to the cloud pod instance 84.
In an eleventh processing step [11], the initialization container (or InitContainer) (at the cloud pod instance 84) is started, and the first secret part X1 is handed over.
In a twelfth processing step [12], the initialization container (at the cloud pod instance 84) requests the second secret part X2 from the cloud secret store instance 83, and in a thirteenth processing step [13], the cloud secret store instance 83 provides the second secret part X2 to the cloud pod instance 84, especially the initialization container. Likewise, in a fourteenth processing step [14], the initialization container (at the cloud pod instance 84) requests the third secret part X3 from the trusted party secret store instance 92, and in a fifteenth processing step [15], the trusted party secret store instance 92 provides the third secret part X3 to the cloud pod instance 84, especially the initialization container.
In a sixteenth processing step [16], at the cloud pod instance 84, and especially by the initialization container, the secret information X is generated based on the knowledge of the first, second and third secret parts X1, X2, X3 (X = f(X1, X2, X3)).
In a seventeenth processing step [17], at the cloud pod instance 84, and especially by the initialization container, the secret information X is kept for the main container (of the considered one specific microservice (e.g. 41) of the plurality of microservices 41, 42, 43 and/or the considered one specific software container (e.g. 51) of the plurality of software containers 51, 52, 53.
In an eighteenth processing step [18], the main container is pulled by the cloud pod instance 84, especially the initialization container, and in a nineteenth processing step [19], the main container is transmitted to the cloud pod instance 84, especially the initialization container.
In a twentieth processing step [20], the main container is started by or at the cloud pod instance 84, and in a twenty-first processing step [21], the main container (especially operatively) uses the secret information X.

Hence, Figure 2 shows an implementation with three components (or secret parts X1, X2, X3) which are used in the continuous integration / continuous delivery chain 87, in the cloud secret store (instance) 83, and in a separate secret store, i.e. the trusted party secret store instance 92: The "Secret Management" system (secret management instance 60) generates the necessary parts or components (i.e. the secret parts X1, X2, X3), which can then be used to compute the actual secret information (especially step-by-step) using the f() function (cf. the first processing step [01]).
The secret parts X1, X2, X3 are then distributed once by secure means to the appropriate systems or persons (cf. processing steps [02] to [07]), thereby splitting the secret information X between the continuous integration / continuous delivery chain 87, the cloud secret store instance 83, and the trusted party secret store instance 92.
In the deployment chain [cf. processing steps 08] to [21], the secret parts X1, X2, X3 are then inserted (processing step [08]) or retrieved (processing steps [12]-[13] and [14]-[15]) accordingly by the corresponding components / systems. Depending on the hosting environment and the chosen function f(), different implementations or use of different components may be necessary. In the example of Figure 2, a Kubernetes platform is used, where the query of the secret parts X1, X2, X3 and the application of f() are implemented via an Init container.
Subsequently, the secret information X is then computed using the f() function (cf. processing step [16]) and is then available in the container (cf. processing step [20]).

## Claims

1. Method for providing the functionality of multiple microservices (41, 42, 43) and/or the functionality of multiple software containers (51, 52, 53) by means of a cloud infrastructure (80), wherein with respect to the microservices (41, 42, 43) and/or the software containers (51, 52, 53) the cloud infrastructure (80) comprises or is associated with a cloud domain (81) and a continuous integration / continuous delivery domain (85),
wherein the cloud domain (81) comprises a cloud pod instance (84),
wherein the cloud infrastructure (80) furthermore comprises or is associated with a secret management instance (60) and a container image repository (61),
wherein, in order to deploy and operatively use a specific microservice (41) and/or a specific software container (51) as part of the pod instance (84), the pod instance (84) needs to be provided with a secret information (X),
wherein the method comprises the steps of:
-- in a first step, the secret management instance (60) generates a first secret part (X1) of the secret information (X) and at least a second secret part (X2) of the secret information (X), wherein the secret information (X) is able to be generated, based on a knowledge of the first and the at least second secret parts (X1, X2), by means of applying a secret generation algorithm comprising applying a cryptographic function to the first and the at least second secret parts (X1, X2),
-- in a second step, the first secret part (X1) is provided, by the secret management instance (60), to a first entity or functionality, and the second secret part (X2) is provided, by the secret management instance (60), to a second entity or functionality, wherein the first and second entities or functionalities are chosen among
-- a continuous integration / continuous delivery chain (87),
-- a cloud secret store instance (83),
-- a trusted party secret store instance, and
-- a further continuous integration / continuous delivery chain,
-- in a third step, in view of the specific microservice (41) and/or the specific software container (51) being deployed and operatively used as a part of the pod instance (84), a respective container deployment information is provided to the pod instance (84), wherein providing the container deployment information to the pod instance (84) and initializing the container deployment information involves transmitting an initialization container image from the container image repository (61) to the pod instance (84) and starting an initialization container,
wherein the initialization container uses the first and second secret parts (X1, X2) to generate the secret information (X) by applying the secret generation algorithm and keeps the generated secret information (X) for a main container, and wherein, after starting or completing the initialization container, the main container is provided to the pod instance (84), and the main container is provided with the secret information (X).

2. Method according to claim 1, wherein - in the first step and besides the first secret part (X1) and the second secret part (X2) of the secret information (X) - the secret management instance (60) generates at least a third secret part (X3) of the secret information (X), wherein the secret information (X) is able to be generated, based on a knowledge of the first, the second and the at least third secret parts (X1, X2, X3), by means of applying a secret generation algorithm,
wherein - in the second step and besides the first and second secret parts (X1, X2) being provided to the first and second entities or functionalities - the third secret part (X3) is provided, by the secret management instance (60), to a third entity or functionality, wherein the first, second and third entities or functionalities are chosen among
-- the continuous integration / continuous delivery chain (87),
-- the cloud secret store instance (83),
-- the trusted party secret store instance, and
-- the further continuous integration / continuous delivery chain,
and wherein - in the third step - the initialization of the container deployment information involves to use the first, second and at least third secret parts (X1, X2, X3) to generate the secret information (X), based on the first, second and at least third secret parts (X1, X2, X3), by means of applying the secret generation algorithm.

3. Method according to one of the preceding claims, wherein the initialization of the container deployment information, especially the start of the initialization container, involves at least one out of the following:
-- to transmit the first secret part (X1) and at least the second secret part (X2) to the pod instance (84), and to generate, at the pod instance (84), the secret information (X), based on the first and at least the second secret parts (X1, X2), by means of applying the secret generation algorithm,
-- to transmit the first secret part (X1) and at least the second secret part (X2) to a further continuous integration / continuous delivery chain, and to generate, at the further continuous integration / continuous delivery chain, the secret information (X), based on the first and at least the second secret parts (X1, X2), by means of applying the secret generation algorithm, and, especially, to provide the secret information (X) from the further continuous integration / continuous delivery chain to the pod instance (84),
-- to transmit the first secret part (X1) and at least the second secret part (X2) to a trusted computing enclave, and to generate, at the trusted computing enclave, the secret information (X), based on the first and at least the second secret parts (X1, X2), by means of applying the secret generation algorithm, and, especially, to provide the secret information (X) from the trusted computing enclave to the pod instance (84).

4. Method according to one of the preceding claims, wherein the secret information (X) is able to be generated, based on a knowledge of the first and second secret parts (X1, X2), wherein at least one out of the following is realized:
-- the first entity or functionality corresponds to the continuous integration / continuous delivery chain (87) and the second entity or functionality corresponds to the cloud secret store instance (83), or to the trusted party secret store instance, or to the further continuous integration / continuous delivery chain,
-- the first entity or functionality corresponds to the cloud secret store instance (83) and the second entity or functionality corresponds to the GitLab secret store instance, or to the trusted party secret store instance, or to the further continuous integration / continuous delivery chain.

5. Method according to one of the preceding claims, wherein the secret information (X) is able to be generated, based on a knowledge of the first, second and third secret parts (X1, X2, X3), wherein at least one out of the following is realized:
-- the first entity or functionality corresponds to the continuous integration / continuous delivery chain (87), the second entity or functionality corresponds to the cloud secret store instance (83), and the third entity or functionality corresponds to the GitLab secret store instance, or to the trusted party secret store instance, or to the further continuous integration / continuous delivery chain,
-- the first entity or functionality corresponds to the cloud secret store instance (83), the second entity or functionality corresponds to trusted party secret store instance, and the third entity or functionality corresponds to to the further continuous integration / continuous delivery chain.

6. Method according to one of the preceding claims, wherein the cloud domain (81) comprises - besides the cloud pod instance (84) - a cloud administrator instance (82) and a cloud secret store instance (83) and/or wherein the continuous integration / continuous delivery domain (85) comprises a continuous integration / continuous delivery administrator instance (86) and a continuous integration / continuous delivery chain (87).

7. System or cloud infrastructure (80) for providing the functionality of multiple microservices (41, 42, 43) and/or the functionality of multiple software containers (51, 52, 53), wherein with respect to the microservices (41, 42, 43) and/or the software containers (51, 52, 53) the cloud infrastructure (80) comprises or is associated with a cloud domain (81) and a continuous integration / continuous delivery domain (85),
wherein the cloud domain (81) comprises a cloud pod instance (84),
wherein the cloud infrastructure (80) furthermore comprises or is associated with a secret management instance (60) and a container image repository (61), wherein, in order to deploy and operatively use a specific microservice (41) and/or a specific software container (51) as part of the pod instance (84), the pod instance (84) needs to be provided with a secret information (X),
wherein the system or cloud infrastructure (80) is configured such that:
-- the secret management instance (60) generates a first secret part (X1) of the secret information (X) and at least a second secret part (X2) of the secret information (X), wherein the secret information (X) is able to be generated, based on a knowledge of the first and the at least second secret parts (X1, X2), by means of applying a secret generation algorithm comprising applying a cryptographic function to the first and the at least second secret parts (X1, X2),
-- the first secret part (X1) is provided, by the secret management instance (60), to a first entity or functionality, and the second secret part (X2) is provided, by the secret management instance (60), to a second entity or functionality, wherein the first and second entities or functionalities are chosen among
-- the continuous integration / continuous delivery chain (87),
-- the cloud secret store instance (83),
-- a GitLab secret store instance, and
-- a trusted party secret store instance,
-- a further continuous integration / continuous delivery chain,
-- in view of the specific microservice (41) and/or the specific software container (51) being deployed and operatively used as a part of the pod instance (84), a respective container deployment information is provided to the pod instance (84), wherein providing the container deployment information to the pod instance (84) and initializing the container deployment information involves transmitting an initialization container image from the container image repository (61) to the pod instance (84) and starting an initialization container, wherein the initialization container uses the first and second secret parts (X1, X2) to generate the secret information (X) by applying the secret generation algorithm and keeps the generated secret information (X) for a main container, and wherein, after starting or completing the initialization container, the main container is provided to the pod instance (84), and the main container is provided with the secret information (X).

8. Secret management instance (60) for being operated as part of a system or as part of or associated with a cloud infrastructure (80) according to claim 7.

9. Program comprising a computer readable program code, which, when executed on a computer and/or on a secret management instance (60) and/or on a cloud domain (81) and/or on a continuous integration / continuous delivery domain (85) and/or on a GitLab secret store instance and/or on a trusted party secret store instance and/or on a further continuous integration / continuous delivery chain, or in part on a secret management instance (60) and/or in part on a cloud domain (81) and/or in part on a continuous integration / continuous delivery domain (85) and/or in part on a GitLab secret store instance and/or in part on a trusted party secret store instance and/or in part on a further continuous integration / continuous delivery chain, causes the computer and/or the secret management instance (60) and/or the cloud domain (81) and/or the continuous integration / continuous delivery domain (85) and/or the GitLab secret store instance and/or the trusted party secret store instance and/or the further continuous integration / continuous delivery chain to perform a method according one of claims 1 to 6.

10. Computer-readable medium comprising instructions which when executed on a computer and/or on a secret management instance (60) and/or on a cloud domain (81) and/or on a continuous integration / continuous delivery domain (85) and/or on a GitLab secret store instance and/or on a trusted party secret store instance and/or on a further continuous integration / continuous delivery chain, or in part on a secret management instance (60) and/or in part on a cloud domain (81) and/or in part on a continuous integration / continuous delivery domain (85) and/or in part on a GitLab secret store instance and/or in part on a trusted party secret store instance and/or in part on a further continuous integration / continuous delivery chain, causes the computer and/or the secret management instance (60) and/or the cloud domain (81) and/or the continuous integration / continuous delivery domain (85) and/or the GitLab secret store instance and/or the trusted party secret store instance and/or the further continuous integration / continuous delivery chain to perform a method according to one of claims 1 to 6.

## Patentansprüche

1. Verfahren zur Bereitstellung der Funktionalität mehrerer Mikrodienste (41, 42, 43) und/oder der Funktionalität mehrerer Software-Container (51, 52, 53) mittels einer Cloud-Infrastruktur (80), wobei die Cloud-Infrastruktur (80) in Bezug auf die Mikrodienste (41, 42, 43) und/oder die Software-Container (51, 52, 53) eine Cloud-Domäne (81) und eine Continuous-Integration-/Continuous-Delivery-Domäne (85) umfasst oder dieser zugeordnet ist,
wobei die Cloud-Domäne (81) eine Cloud-Pod-Instanz (84) umfasst,
wobei die Cloud-Infrastruktur (80) ferner eine Secret-Management-Instanz (60) und ein Container-Image-Repository (61) umfasst oder diesen zugeordnet ist,
wobei die Cloud-Pod-Instanz (84) mit einer Secret-Information (X) versorgt werden muss, um einen bestimmten Mikrodienst (41) und/oder einen bestimmten Software-Container (51) als Teil der Cloud-Pod-Instanz (84) bereitzustellen und in Betrieb zu nehmen,
wobei das Verfahren die folgenden Schritte umfasst:
- in einem ersten Schritt erzeugt die Secret-Management-Instanz (60) einen ersten Secret-Teil (X1) der Secret-Information (X) und mindestens einen zweiten Secret-Teil (X2) der Secret-Information (X), wobei die Secret-Information (X) auf der Grundlage einer Kenntnis des ersten und des mindestens zweiten Secret-Teils (X1, X2) durch Anwenden eines Secret-Generierungsalgorithmus, der das Anwenden einer kryptographischen Funktion auf den ersten und den mindestens zweiten Secret-Teil (X1, X2) umfasst, erzeugt werden kann,
- in einem zweiten Schritt wird der erste Secret-Teil (X1) von der Secret-Management-Instanz (60) einer ersten Einheit oder Funktionalität bereitgestellt und der zweite Secret-Teil (X2) wird von der Secret-Management-Instanz (60) einer zweiten Einheit oder Funktionalität bereitgestellt, wobei die erste und die zweite Einheit oder Funktionalität unter folgenden Einheiten oder Funktionalitäten gewählt werden:
- eine Continuous-Integration-/Continuous-Delivery-Kette (87),
- eine Cloud-Secret-Store-Instanz (83),
- eine Trusted-Party-Secret-Store-Instanz, und
- eine weitere Continuous-Integration-/Continuous-Delivery-Kette,
- in einem dritten Schritt wird im Hinblick auf den bestimmten Mikrodienst (41) und/oder den bestimmten Software-Container (51), der als Teil der Cloud-Pod-Instanz (84) bereitzustellen und in Betrieb zu nehmen ist, der Cloud-Pod-Instanz (84) eine entsprechende Container-Deployment-Information bereitgestellt, wobei das Bereitstellen der Container-Deployment-Information an die Cloud-Pod-Instanz (84) und das Initialisieren der Container-Deployment-Information das Übertragen eines Initialisierungs-Container-Images vom Container-Image-Repository (61) an die Cloud-Pod-Instanz (84) und das Starten eines Initialisierungs-Containers umfasst,
wobei der Initialisierungs-Container den ersten und den zweiten Secret-Teil (X1, X2) verwendet, um die Secret-Information (X) durch Anwenden des Secret-Generierungsalgorithmus zu erzeugen, und die erzeugte Secret-Information (X) für einen Haupt-Container vorhält, und wobei, nach dem Starten oder Abschließen des Initialisierungs-Containers, der Haupt-Container der Cloud-Pod-Instanz (84) bereitgestellt wird und der Haupt-Container mit der Secret-Information (X) versorgt wird.

2. Verfahren nach Anspruch 1, wobei die Secret-Management-Instanz (60) - im ersten Schritt und neben dem ersten Secret-Teil (X1) und dem zweiten Secret-Teil (X2) der Secret-Information (X) - mindestens einen dritten Secret-Teil (X3) der Secret-Information (X) erzeugt, wobei die Secret-Information (X) auf der Grundlage einer Kenntnis des ersten, des zweiten und des mindestens dritten Secret-Teils (X1, X2, X3) durch Anwenden eines Secret-Generierungsalgorithmus erzeugt werden kann,
wobei - im zweiten Schritt und neben dem ersten und zweiten Secret-Teil (X1, X2), die der ersten und der zweiten Einheit oder Funktionalität bereitgestellt werden - der dritte Secret-Teil (X3) von der Secret-Management-Instanz (60) einer dritten Einheit oder Funktionalität bereitgestellt wird, wobei die erste, die zweite und die dritte Einheit oder Funktionalität unter folgenden Einheiten oder Funktionalitäten gewählt werden:
- die Continuous-Integration-/Continuous-Delivery-Kette (87),
- die Cloud-Secret-Store-Instanz (83),
- die Trusted-Party-Secret-Store-Instanz, und
- die weitere Continuous-Integration-/Continuous-Delivery-Kette,
und wobei - im dritten Schritt - das Initialisieren der Container-Deployment-Information die Verwendung des ersten, des zweiten und des mindestens dritten Secret-Teils (X1, X2, X3) umfasst, um die Secret-Information (X), basierend auf dem ersten, dem zweiten und dem mindestens dritten Secret-Teil (X1, X2, X3), durch Anwenden des Secret-Generierungsalgorithmus zu erzeugen.

3. Verfahren nach einem der vorstehenden Ansprüche, wobei das Initialisieren der Container-Deployment-Information, insbesondere das Starten des Initialisierungs-Containers, mindestens einen der folgenden Schritte umfasst:
- Übertragen des ersten Secret-Teils (X1) und mindestens des zweiten Secret-Teils (X2) an die Cloud-Pod-Instanz (84) und Erzeugen der Secret-Information (X) an der Cloud-Pod-Instanz (84), basierend auf dem ersten und mindestens dem zweiten Secret-Teil (X1, X2), durch Anwenden des Secret-Generierungsalgorithmus,
- Übertragen des ersten Secret-Teils (X1) und mindestens des zweiten Secret-Teils (X2) an eine weitere Continuous-Integration-/Continuous-Delivery-Kette und Erzeugen der Secret-Information (X) an der weiteren Continuous-Integration-/Continuous-Delivery-Kette, basierend auf dem ersten und mindestens dem zweiten Secret-Teil (X1, X2), durch Anwenden des Secret-Generierungsalgorithmus, und insbesondere Bereitstellen der Secret-Information (X) von der weiteren Continuous-Integration-/Continuous-Delivery-Kette an die Cloud-Pod-Instanz (84),
- Übertragen des ersten Secret-Teils (X1) und mindestens des zweiten Secret-Teils (X2) an eine Trusted-Computing-Enklave und Erzeugen der Secret-Information (X) an der Trusted-Computing-Enklave, basierend auf dem ersten und mindestens dem zweiten Secret-Teil (X1, X2), durch Anwenden des Secret-Generierungsalgorithmus, und insbesondere Bereitstellen der Secret-Information (X) von der Trusted-Computing-Enklave an die Cloud-Pod-Instanz (84).

4. Verfahren nach einem der vorstehenden Ansprüche, wobei die Secret-Information (X) auf der Grundlage einer Kenntnis des ersten und zweiten Secret-Teils (X1, X2) erzeugt werden kann, wobei mindestens eines der folgenden realisiert ist:
- die erste Einheit oder Funktionalität entspricht der Continuous-Integration-/Continuous-Delivery-Kette (87) und die zweite Einheit oder Funktionalität entspricht der Cloud-Secret-Store-Instanz (83), oder der Trusted-Party-Secret-Store-Instanz, oder der weiteren Continuous-Integration-/Continuous-Delivery-Kette,
- die erste Einheit oder Funktionalität entspricht der Cloud-Secret-Store-Instanz (83) und die zweite Einheit oder Funktionalität entspricht der GitLab-Secret-Store-Instanz, oder der Trusted-Party-Secret-Store-Instanz, oder der weiteren Continuous-Integration-/Continuous-Delivery-Kette.

5. Verfahren nach einem der vorstehenden Ansprüche, wobei die Secret-Information (X) auf der Grundlage einer Kenntnis des ersten, zweiten und dritten Secret-Teils (X1, X2, X3) erzeugt werden kann, wobei mindestens eines der folgenden realisiert ist:
- die erste Einheit oder Funktionalität entspricht der Continuous-Integration-/Continuous-Delivery-Kette (87), die zweite Einheit oder Funktionalität entspricht der Cloud-Secret-Store-Instanz (83) und die dritte Einheit oder Funktionalität entspricht der GitLab-Secret-Store-Instanz, oder der Trusted-Party-Secret-Store-Instanz, oder der weiteren Continuous-Integration-/Continuous-Delivery-Kette,
- die erste Einheit oder Funktionalität entspricht der Cloud-Secret-Store-Instanz (83), die zweite Einheit oder Funktionalität entspricht der Trusted-Party-Secret-Store-Instanz und die dritte Einheit oder Funktionalität entspricht der weiteren Continuous-Integration-/Continuous-Delivery-Kette.

6. Verfahren nach einem der vorstehenden Ansprüche, wobei die Cloud-Domäne (81) - neben der Cloud-Pod-Instanz (84) - eine Cloud-Administrator-Instanz (82) und eine Cloud-Secret-Store-Instanz (83) umfasst und/oder wobei die Continuous-Integration-/Continuous-Delivery-Domäne (85) eine CI/CD-Administrator-Instanz (86) und eine Continuous-Integration-/Continuous-Delivery-Kette (87) umfasst.

7. System oder Cloud-Infrastruktur (80) zur Bereitstellung der Funktionalität mehrerer Mikrodienste (41, 42, 43) und/oder der Funktionalität mehrerer Software-Container (51, 52, 53), wobei die Cloud-Infrastruktur (80) in Bezug auf die Mikrodienste (41, 42, 43) und/oder die Software-Container (51, 52, 53) eine Cloud-Domäne (81) und eine Continuous-Integration-/Continuous-Delivery-Domäne (85) umfasst oder dieser zugeordnet ist,
wobei die Cloud-Domäne (81) eine Cloud-Pod-Instanz (84) umfasst,
wobei die Cloud-Infrastruktur (80) ferner eine Secret-Management-Instanz (60) und ein Container-Image-Repository (61) umfasst oder diesen zugeordnet ist,
wobei die Cloud-Pod-Instanz (84) mit einer Secret-Information (X) versorgt werden muss, um einen bestimmten Mikrodienst (41) und/oder einen bestimmten Software-Container (51) als Teil der Cloud-Pod-Instanz (84) bereitzustellen und in Betrieb zu nehmen,
wobei das System oder die Cloud-Infrastruktur (80) derart konfiguriert ist, dass:
- die Secret-Management-Instanz (60) einen ersten Secret-Teil (X1) der Secret-Information (X) und mindestens einen zweiten Secret-Teil (X2) der Secret-Information (X) erzeugt, wobei die Secret-Information (X) auf der Grundlage einer Kenntnis des ersten und des mindestens zweiten Secret-Teils (X1, X2) durch Anwenden eines Secret-Generierungsalgorithmus, der das Anwenden einer kryptographischen Funktion auf den ersten und den mindestens zweiten Secret-Teil (X1, X2) umfasst, erzeugt werden kann,
- der erste Secret-Teil (X1) von der Secret-Management-Instanz (60) einer ersten Einheit oder Funktionalität bereitgestellt wird und der zweite Secret-Teil (X2) von der Secret-Management-Instanz (60) einer zweiten Einheit oder Funktionalität bereitgestellt wird, wobei die erste und die zweite Einheit oder Funktionalität unter folgenden Einheiten oder Funktionalitäten gewählt werden:
- die Continuous-Integration-/Continuous-Delivery-Kette (87),
- die Cloud-Secret-Store-Instanz (83),
- eine GitLab-Secret-Store-Instanz, und
- eine Trusted-Party-Secret-Store-Instanz,
- eine weitere Continuous-Integration-/Continuous-Delivery-Kette,
- im Hinblick auf den bestimmten Mikrodienst (41) und/oder den bestimmten Software-Container (51), der als Teil der Cloud-Pod-Instanz (84) bereitzustellen und in Betrieb zu nehmen ist, der Cloud-Pod-Instanz (84) eine entsprechende Container-Deployment-Information bereitgestellt wird, wobei das Bereitstellen der Container-Deployment-Information an die Cloud-Pod-Instanz (84) und das Initialisieren der Container-Deployment-Information das Übertragen eines Initialisierungs-Container-Images vom Container-Image-Repository (61) an die Cloud-Pod-Instanz (84) und das Starten eines Initialisierungs-Containers umfasst, wobei der Initialisierungs-Container den ersten und den zweiten Secret-Teil (X1, X2) verwendet, um die Secret-Information (X) durch Anwenden des Secret-Generierungsalgorithmus zu erzeugen, und die erzeugte Secret-Information (X) für einen Haupt-Container vorhält, und wobei, nach dem Starten oder Abschließen des Initialisierungs-Containers, der Haupt-Container der Cloud-Pod-Instanz (84) bereitgestellt wird und der Haupt-Container mit der Secret-Information (X) versorgt wird.

8. Secret-Management-Instanz (60) zum Betrieb als Teil eines Systems oder als Teil einer oder zugeordnet zu einer Cloud-Infrastruktur (80) nach Anspruch 7.

9. Programm, das einen Programmcode umfasst, der, wenn er auf einem Computer und/oder auf einer Secret-Management-Instanz (60) und/oder auf einer Cloud-Domäne (81) und/oder auf einer Continuous-Integration-/Continuous-Delivery-Domäne (85) und/oder auf einer GitLab-Secret-Store-Instanz und/oder auf einer Trusted-Party-Secret-Store-Instanz und/oder auf einer weiteren Continuous-Integration-/Continuous-Delivery-Kette ausgeführt wird, oder teilweise auf einer Secret-Management-Instanz (60) und/oder teilweise auf einer Cloud-Domäne (81) und/oder teilweise auf einer Continuous-Integration-/Continuous-Delivery-Domäne (85) und/oder teilweise auf einer GitLab-Secret-Store-Instanz und/oder teilweise auf einer Trusted-Party-Secret-Store-Instanz und/oder teilweise auf einer weiteren Continuous-Integration-/Continuous-Delivery-Kette ausgeführt wird, den Computer und/oder die Secret-Management-Instanz (60) und/oder die Cloud-Domäne (81) und/oder die Continuous-Integration-/Continuous-Delivery-Domäne (85) und/oder die GitLab-Secret-Store-Instanz und/oder die Trusted-Party-Secret-Store-Instanz und/oder die weitere Continuous-Integration-/Continuous-Delivery-Kette veranlasst, ein Verfahren nach einem der Ansprüche 1 bis 6 auszuführen.

10. Computerlesbares Medium, das Anweisungen umfasst, die, wenn sie auf einem Computer und/oder auf einer Secret-Management-Instanz (60) und/oder auf einer Cloud-Domäne (81) und/oder auf einer Continuous-Integration-/Continuous-Delivery-Domäne (85) und/oder auf einer GitLab-Secret-Store-Instanz und/oder auf einer Trusted-Party-Secret-Store-Instanz und/oder auf einer weiteren Continuous-Integration-/Continuous-Delivery-Kette ausgeführt werden, oder teilweise auf einer Secret-Management-Instanz (60) und/oder teilweise auf einer Cloud-Domäne (81) und/oder teilweise auf einer Continuous-Integration-/Continuous-Delivery-Domäne (85) und/oder teilweise auf einer GitLab-Secret-Store-Instanz und/oder teilweise auf einer Trusted-Party-Secret-Store-Instanz und/oder teilweise auf einer weiteren Continuous-Integration-/Continuous-Delivery-Kette ausgeführt werden, den Computer und/oder die Secret-Management-Instanz (60) und/oder die Cloud-Domäne (81) und/oder die Continuous-Integration-/Continuous-Delivery-Domäne (85) und/oder die GitLab-Secret-Store-Instanz und/oder die Trusted-Party-Secret-Store-Instanz und/oder die weitere Continuous-Integration-/Continuous-Delivery-Kette veranlassen, ein Verfahren nach einem der Ansprüche 1 bis 6 auszuführen.

## Revendications

1. Procédé de fourniture de la fonctionnalité de plusieurs microservices (41, 42, 43) et/ou de la fonctionnalité de plusieurs conteneurs logiciels (51, 52, 53) au moyen d'une infrastructure en nuage (80), dans lequel, en ce qui concerne les microservices (41, 42, 43) et/ou les conteneurs logiciels (51, 52, 53), l'infrastructure en nuage (80) comprend ou est associée à un domaine en nuage (81) et à un domaine d'intégration continue / de livraison continue (85),
dans lequel le domaine en nuage (81) comprend une instance de pod en nuage (84),
dans lequel l'infrastructure en nuage (80) comprend en outre ou est associée à une instance de gestion de secrets (60) et à un référentiel d'images de conteneurs (61),
dans lequel, afin de déployer et d'utiliser opérationnellement un microservice (41) spécifique et/ou un conteneur logiciel (51) spécifique en tant que partie de l'instance de pod en nuage (84), l'instance de pod en nuage (84) doit être pourvue d'une information secrète (X),
dans lequel le procédé comprend les étapes suivantes :
- dans une première étape, l'instance de gestion de secrets (60) génère une première partie secrète (X1) de l'information secrète (X) et au moins une deuxième partie secrète (X2) de l'information secrète (X), dans lequel l'information secrète (X) peut être générée, sur la base d'une connaissance de la première et de l'au moins deuxième partie secrète (X1, X2), par application d'un algorithme de génération de secrets comprenant l'application d'une fonction cryptographique à la première et à l'au moins deuxième partie secrète (X1, X2),
- dans une deuxième étape, la première partie secrète (X1) est fournie, par l'instance de gestion de secrets (60), à une première entité ou fonctionnalité, et la deuxième partie secrète (X2) est fournie, par l'instance de gestion de secrets (60), à une deuxième entité ou fonctionnalité, dans lequel les première et deuxième entités ou fonctionnalités sont choisies parmi :
- une chaîne d'intégration continue / de livraison continue (87),
- une instance de stockage de secrets en nuage (83),
- une instance de stockage de secrets d'une partie de confiance, et
- une autre chaîne d'intégration continue / de livraison continue,
- dans une troisième étape, en vue du déploiement et de l'utilisation opérationnelle du microservice (41) spécifique et/ou du conteneur logiciel (51) spécifique en tant que partie de l'instance de pod en nuage (84), une information de déploiement de conteneur respective est fournie à l'instance de pod en nuage (84), dans lequel la fourniture de l'information de déploiement de conteneur à l'instance de pod en nuage (84) et l'initialisation de l'information de déploiement de conteneur impliquent la transmission d'une image de conteneur d'initialisation depuis le référentiel d'images de conteneurs (61) vers l'instance de pod en nuage (84) et le démarrage d'un conteneur d'initialisation,
dans lequel le conteneur d'initialisation utilise les première et deuxième parties secrètes (X1, X2) pour générer l'information secrète (X) par application de l'algorithme de génération de secrets et conserve l'information secrète (X) générée pour un conteneur principal, et dans lequel, après le démarrage ou l'achèvement du conteneur d'initialisation, le conteneur principal est fourni à l'instance de pod en nuage (84) et le conteneur principal est pourvu de l'information secrète (X).

2. Procédé selon la revendication 1, dans lequel - dans la première étape et en plus de la première partie secrète (X1) et de la deuxième partie secrète (X2) de l'information secrète (X) - l'instance de gestion de secrets (60) génère au moins une troisième partie secrète (X3) de l'information secrète (X), dans lequel l'information secrète (X) peut être générée, sur la base d'une connaissance de la première, de la deuxième et de l'au moins troisième partie secrète (X1, X2, X3), par application d'un algorithme de génération de secrets,
dans lequel - dans la deuxième étape et en plus des première et deuxième parties secrètes (X1, X2) fournies aux première et deuxième entités ou fonctionnalités - la troisième partie secrète (X3) est fournie, par l'instance de gestion de secrets (60), à une troisième entité ou fonctionnalité, dans lequel les première, deuxième et troisième entités ou fonctionnalités sont choisies parmi :
- la chaîne d'intégration continue / de livraison continue (87),
- l'instance de stockage de secrets en nuage (83),
- l'instance de stockage de secrets d'une partie de confiance, et
- l'autre chaîne d'intégration continue / de livraison continue,
et dans lequel - dans la troisième étape - l'initialisation de l'information de déploiement de conteneur implique l'utilisation des première, deuxième et au moins troisième parties secrètes (X1, X2, X3) pour générer l'information secrète (X), sur la base des première, deuxième et au moins troisième parties secrètes (X1, X2, X3), par application de l'algorithme de génération de secrets.

3. Procédé selon l'une des revendications précédentes, dans lequel l'initialisation de l'information de déploiement de conteneur, notamment le démarrage du conteneur d'initialisation, implique au moins l'une des opérations suivantes :
- transmettre la première partie secrète (X1) et au moins la deuxième partie secrète (X2) à l'instance de pod en nuage (84), et générer, au niveau de l'instance de pod en nuage (84), l'information secrète (X), sur la base de la première et de l'au moins deuxième partie secrète (X1, X2), par application de l'algorithme de génération de secrets,
- transmettre la première partie secrète (X1) et au moins la deuxième partie secrète (X2) à une autre chaîne d'intégration continue / de livraison continue, et générer, au niveau de cette autre chaîne d'intégration continue / de livraison continue, l'information secrète (X), sur la base de la première et de l'au moins deuxième partie secrète (X1, X2), par application de l'algorithme de génération de secrets, et notamment fournir l'information secrète (X) depuis cette autre chaîne d'intégration continue / de livraison continue à l'instance de pod en nuage (84),
- transmettre la première partie secrète (X1) et au moins la deuxième partie secrète (X2) à une enclave d'informatique de confiance, et générer, au niveau de cette enclave d'informatique de confiance, l'information secrète (X), sur la base de la première et de l'au moins deuxième partie secrète (X1, X2), par application de l'algorithme de génération de secrets, et notamment fournir l'information secrète (X) depuis cette enclave d'informatique de confiance à l'instance de pod en nuage (84).

4. Procédé selon l'une des revendications précédentes, dans lequel l'information secrète (X) peut être générée sur la base d'une connaissance des première et deuxième parties secrètes (X1, X2), dans lequel au moins l'une des conditions suivantes est réalisée :
- la première entité ou fonctionnalité correspond à la chaîne d'intégration continue / de livraison continue (87) et la deuxième entité ou fonctionnalité correspond à l'instance de stockage de secrets en nuage (83), ou à l'instance de stockage de secrets d'une partie de confiance, ou à l'autre chaîne d'intégration continue / de livraison continue,
- la première entité ou fonctionnalité correspond à l'instance de stockage de secrets en nuage (83) et la deuxième entité ou fonctionnalité correspond à l'instance de stockage de secrets GitLab, ou à l'instance de stockage de secrets d'une partie de confiance, ou à l'autre chaîne d'intégration continue / de livraison continue.

5. Procédé selon l'une des revendications précédentes, dans lequel l'information secrète (X) peut être générée sur la base d'une connaissance des première, deuxième et troisième parties secrètes (X1, X2, X3), dans lequel au moins l'une des conditions suivantes est réalisée :
- la première entité ou fonctionnalité correspond à la chaîne d'intégration continue / de livraison continue (87), la deuxième entité ou fonctionnalité correspond à l'instance de stockage de secrets en nuage (83) et la troisième entité ou fonctionnalité correspond à l'instance de stockage de secrets GitLab, ou à l'instance de stockage de secrets d'une partie de confiance, ou à l'autre chaîne d'intégration continue / de livraison continue,
- la première entité ou fonctionnalité correspond à l'instance de stockage de secrets en nuage (83), la deuxième entité ou fonctionnalité correspond à l'instance de stockage de secrets d'une partie de confiance et la troisième entité ou fonctionnalité correspond à l'autre chaîne d'intégration continue / de livraison continue.

6. Procédé selon l'une des revendications précédentes, dans lequel le domaine en nuage (81) comprend - en plus de l'instance de pod en nuage (84) - une instance d'administrateur en nuage (82) et une instance de stockage de secrets en nuage (83) et/ou dans lequel le domaine d'intégration continue / de livraison continue (85) comprend une instance d'administrateur d'intégration continue / de livraison continue (86) et une chaîne d'intégration continue / de livraison continue (87).

7. Système ou infrastructure en nuage (80) pour la fourniture de la fonctionnalité de plusieurs microservices (41, 42, 43) et/ou de la fonctionnalité de plusieurs conteneurs logiciels (51, 52, 53), dans lequel, en ce qui concerne les microservices (41, 42, 43) et/ou les conteneurs logiciels (51, 52, 53), l'infrastructure en nuage (80) comprend ou est associée à un domaine en nuage (81) et à un domaine d'intégration continue / de livraison continue (85),
dans lequel le domaine en nuage (81) comprend une instance de pod en nuage (84),
dans lequel l'infrastructure en nuage (80) comprend en outre ou est associée à une instance de gestion de secrets (60) et à un référentiel d'images de conteneurs (61),
dans lequel, afin de déployer et d'utiliser opérationnellement un microservice (41) spécifique et/ou un conteneur logiciel (51) spécifique en tant que partie de l'instance de pod en nuage (84), l'instance de pod en nuage (84) doit être pourvue d'une information secrète (X),
dans lequel le système ou l'infrastructure en nuage (80) est configuré de telle sorte que :
- l'instance de gestion de secrets (60) génère une première partie secrète (X1) de l'information secrète (X) et au moins une deuxième partie secrète (X2) de l'information secrète (X), dans lequel l'information secrète (X) peut être générée, sur la base d'une connaissance de la première et de l'au moins deuxième partie secrète (X1, X2), par application d'un algorithme de génération de secrets comprenant l'application d'une fonction cryptographique à la première et à l'au moins deuxième partie secrète (X1, X2),
- la première partie secrète (X1) est fournie, par l'instance de gestion de secrets (60), à une première entité ou fonctionnalité, et la deuxième partie secrète (X2) est fournie, par l'instance de gestion de secrets (60), à une deuxième entité ou fonctionnalité, dans lequel les première et deuxième entités ou fonctionnalités sont choisies parmi :
- la chaîne d'intégration continue / de livraison continue (87),
- l'instance de stockage de secrets en nuage (83),
- une instance de stockage de secrets GitLab, et
- une instance de stockage de secrets d'une partie de confiance,
- une autre chaîne d'intégration continue / de livraison continue,
- en vue du déploiement et de l'utilisation opérationnelle du microservice (41) spécifique et/ou du conteneur logiciel (51) spécifique en tant que partie de l'instance de pod en nuage (84), une information de déploiement de conteneur respective est fournie à l'instance de pod en nuage (84), dans lequel la fourniture de l'information de déploiement de conteneur à l'instance de pod en nuage (84) et l'initialisation de l'information de déploiement de conteneur impliquent la transmission d'une image de conteneur d'initialisation depuis le référentiel d'images de conteneurs (61) vers l'instance de pod en nuage (84) et le démarrage d'un conteneur d'initialisation, dans lequel le conteneur d'initialisation utilise les première et deuxième parties secrètes (X1, X2) pour générer l'information secrète (X) par application de l'algorithme de génération de secrets et conserve l'information secrète (X) générée pour un conteneur principal, et dans lequel, après le démarrage ou l'achèvement du conteneur d'initialisation, le conteneur principal est fourni à l'instance de pod en nuage (84) et le conteneur principal est pourvu de l'information secrète (X).

8. Instance de gestion de secrets (60) destinée à être exploitée en tant que partie d'un système ou en tant que partie d'une infrastructure en nuage (80) ou associée à une infrastructure en nuage (80) selon la revendication 7.

9. Programme comprenant un code de programme lisible par ordinateur qui, lorsqu'il est exécuté sur un ordinateur et/ou sur une instance de gestion de secrets (60) et/ou sur un domaine en nuage (81) et/ou sur un domaine d'intégration continue / de livraison continue (85) et/ou sur une instance de stockage de secrets GitLab et/ou sur une instance de stockage de secrets d'une partie de confiance et/ou sur une autre chaîne d'intégration continue / de livraison continue, ou en partie sur une instance de gestion de secrets (60) et/ou en partie sur un domaine en nuage (81) et/ou en partie sur un domaine d'intégration continue / de livraison continue (85) et/ou en partie sur une instance de stockage de secrets GitLab et/ou en partie sur une instance de stockage de secrets d'une partie de confiance et/ou en partie sur une autre chaîne d'intégration continue / de livraison continue, amène l'ordinateur et/ou l'instance de gestion de secrets (60) et/ou le domaine en nuage (81) et/ou le domaine d'intégration continue / de livraison continue (85) et/ou l'instance de stockage de secrets GitLab et/ou l'instance de stockage de secrets d'une partie de confiance et/ou l'autre chaîne d'intégration continue / de livraison continue à exécuter un procédé selon l'une des revendications 1 à 6.

10. Support lisible par ordinateur comprenant des instructions qui, lorsqu'elles sont exécutées sur un ordinateur et/ou sur une instance de gestion de secrets (60) et/ou sur un domaine en nuage (81) et/ou sur un domaine d'intégration continue / de livraison continue (85) et/ou sur une instance de stockage de secrets GitLab et/ou sur une instance de stockage de secrets d'une partie de confiance et/ou sur une autre chaîne d'intégration continue / de livraison continue, ou en partie sur une instance de gestion de secrets (60) et/ou en partie sur un domaine en nuage (81) et/ou en partie sur un domaine d'intégration continue / de livraison continue (85) et/ou en partie sur une instance de stockage de secrets GitLab et/ou en partie sur une instance de stockage de secrets d'une partie de confiance et/ou en partie sur une autre chaîne d'intégration continue / de livraison continue, amènent l'ordinateur et/ou l'instance de gestion de secrets (60) et/ou le domaine en nuage (81) et/ou le domaine d'intégration continue / de livraison continue (85) et/ou l'instance de stockage de secrets GitLab et/ou l'instance de stockage de secrets d'une partie de confiance et/ou l'autre chaîne d'intégration continue / de livraison continue à exécuter un procédé selon l'une des revendications 1 à 6.
